# EUROPÄISCHE PATENTANMELDUNG

(11) **EP 1 303 017 A1**
(43) Veröffentlichungstag der Anmeldung: **16.04.2003**
(21) Anmeldenummer: 01124072.8
(22) Anmeldetag: 10.10.2001
(51) Int. Cl.: H02G 3/12

(54) **Hohlwanddose**

(71) Anmelder: Adolf Würth GmbH & Co. KG, 74653 Künzelsau (DE)
(72) Erfinder: Reuther, Herbert, 74238 Gommersdorf (DE); Humm, Siegfried, 74214 Schöntal-Westernhausen (DE)
(74) Vertreter: Schöndorf, Jürgen

(57) **Zusammenfassung**

Eine Hohlwanddose enthält zwei Spreizelemente (6), die als flache breite Bänder ausgebildet sind. Im Bereich des freien Endes der Spreizelemente sind Führungsabschnitte (12) ausgebildet, mit denen dieses freie Ende in einer Führungsnut (9) in der Wand des Gehäuses geführt ist. Von der Vorderseite her wird eine Schraube in eine Öffnung (13) des Führungsabschnitts (12) eingeschraubt. Durch Anziehen der Schraube wird der Führungsabschnitt (12) nach vorne gezogen, so dass sich das Spreizelement aufspreizt und die Hohlwanddose festlegt. Anders ausgedrückt enthält die Hohlwanddose an zwei Stellen je einen halben Dübel.

## Beschreibung

Zur Unterbringung von elektrischen Installationsteilen, wie beispielsweise Schalter, Steckdosen, Abzweigungen oder dergleichen sind aus Kunststoff bestehende Dosen bekannt, die im Normalfall unter dem Putz angebracht werden. Sie enthalten Öffnungen, durch die die elektrischen Leitungen in die Dosen geführt werden können. Sie enthalten weiterhin Befestigungsmöglichkeiten, um die Steckdose oder dergleichen in der Dose zu verankern.

Zur Unterbringung von solchen Teilen bei Hohlwänden, das heißt beispielsweise Platten, gibt es sogenannte Hohlwanddosen.

Bei den bekannten Hohlwanddosen erfolgt die Verankerung in der Weise, dass die Hohlwanddose in eine Öffnung des Plattenelements eingeschoben wird, bis sie mit ihrem Flansch an der Vorderseite des Plattenelements anliegt. Dann werden metallische Klammern, die in Nuten der Hohlwanddosen geführt sind, mit Hilfe von Schrauben nach vorne gezogen, bis sie an der Rückseite des Plattenelements anliegen. Die hierzu verwendeten Schrauben haben ein Feingewinde, so dass unter Umständen sehr lange geschraubt werden muss, bis die Dose verankert ist.

Die Hohlwanddosen werden in der Regel aus Kunststoff gespritzt. Anschließend müssen aber die Schrauben eingesetzt und auf das Schraubenende die Metallklammer aufgesetzt und die Schraube mindestens zum Teil eingeschraubt werden, damit die Metallklammer festgelegt bleibt. Diese Konfektionierung der bekannten Hohlwanddosen bedeutet einen beachtlichen Aufwand.

Der Erfindung liegt die Aufgabe zugrunde, eine Hohlwanddose in der Weise weiterzuentwickeln, dass sie sich einfach und kostengünstig herstellen lässt, ohne dass die Art ihrer Verwendung Nachteile mit sich bringt.

Zur Lösung dieser Aufgabe schlägt die Erfindung eine Hohlwanddose mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Das Gehäuse der von der Erfindung vorgeschlagenen Hohlwanddose weist an seiner Außenseite einen Flansch auf, der in den meisten Fällen als durchgehender umlaufender Flansch ausgebildet ist und an der vorderen Stirnseite des Gehäuses angeordnet ist. Er könnte aber auch an einer anderen Stelle angeordnet sein, wenn die Hohlwanddose so befestigt werden soll, dass ihre vordere Stirnseite nicht bündig mit der Wandoberfläche verläuft. Das Spreizelement, mit dem die Hohlwanddose an der Rückseite der Öffnung in dem Plattenelement verankert werden soll, wird einstückig mit dem Gehäuse hergestellt, so dass sich ein späterer Konfektionierungsschritt erübrigt. Das Betätigungselement dient dazu, das Spreizelement in seine Sperrposition zu überführen. Es ist mit Vorteil so angeordnet, dass es von der vorderen Stirnseite der Hohlwanddose aus betätigt werden kann.

Insbesondere kann in Weiterbildung der Erfindung vorgesehen sein, dass das Spreizelement langgestreckt ausgebildet und mit seinem einen Ende an dem Gehäuse angeformt ist. Es kann dann durch Verformen oder Aufspreizen die Sperrposition einnehmen.

Insbesondere kann in Weiterbildung vorgesehen sein, dass das Betätigungselement an dem freien Ende des Spreizelements angreift, um dieses in die Sperrposition zu bewegen.

In nochmaliger weiterer Ausgestaltung der Erfindung kann vorgesehen sein, dass das Spreizelement im Bereich seines freien Endes eine Öffnung mit einem geschlossenen Rand aufweist, die als Mutter für das Betätigungselement dient, das in diesem Falle vorzugsweise als Schraube ausgebildet ist. Die Öffnung mit dem geschlossenen Rand braucht kein Gewinde aufzuweisen, da die Schraube entweder ähnlich wie eine Blechschraube kein Gewinde benötigt oder sich ein Gewinde formen kann.

Die Schraube kann insbesondere durch ein Loch in dem Gehäuse hindurchgreifen. Dieses Loch kann so ausgestaltet werden, dass es eine gewisse Länge bzw. Tiefe aufweist, um der Schraube eine Führung zu geben.

Erfindungsgemäß kann in Weiterbildung vorgesehen sein, dass die Schraube innerhalb des Umfangs des Gehäuses angeordnet ist und auch angeordnet bleibt.

Um eine sicher wirkende Aufspreizung in jedem Fall, auch bei ungünstigen Einbausituationen, zu erreichen, kann erfindungsgemäßß in Weiterbildung vorgesehen sein, dass das freie Ende des Spreizelementes an dem Gehäuse verschiebbar geführt ist. Die Festlegung des Spreizelementes geschieht daher durch eine Verformung zwischen den beiden Enden des Spreizelements.

Insbesondere kann in Weiterbildung der Erfindung vorgesehen sein, dass das freie Ende des Spreizelements ein Führungselement aufweist, das in eine Führung des Gehäuses eingreift. Diese Führung des Gehäuses kann insbesondere als Nut ausgebildet sein. Dies macht es möglich, mit geringem Aufwand dafür zu sorgen, dass das Spreizelement in seiner inaktiven Position innerhalb des Umfangs des Gehäuses angeordnet ist, nämlich mindestens teilweise in dieser Nut. Die Nut kann weiterhin dazu dienen, die Schraube aufzunehmen.

In nochmaliger Weiterbildung der Erfindung kann vorgesehen sein, dass das Führungselement von der Seite her in die Führungsnut eingeschnappt werden kann. Unmittelbar nach der Herstellung der Hohlwanddose kann das Spreizelement seitlich wegragen. Es kann dann einfach von der Seite her in die Führungsnut eingeschnappt werden.

In nochmaliger Weiterbildung der Erfindung kann vorgesehen sein, dass das Spreizelement über ein Filmscharnier mit dem Gehäuse verbunden ist.

Um die Hohlwanddose bei Plattenelementen unterschiedlicher Dicke mit einfachen Mitteln anbringen zu können, kann erfindungsgemäßß vorgesehen sein, dass das Spreizelement mindestens eine Knickstelle aufweist, die das Überführen des Spreizelements in die Sperrposition erleichtert. Vorzugsweise können mehrere derartige Knickstellen vorgesehen sein.

In nochmaliger Weiterbildung der Erfindung kann vorgesehen sein, dass es sich bei der Schraube um eine Spanplattenschraube handelt, also um ein handelsübliches Element mit einer relativ großen Gewindesteigung. Dadurch kann dafür gesorgt werden, dass sich das Aufspreizen sehr schnell durchführen lässt, im Gegensatz zu dem Feingewinde bei den Schrauben nach dem Stand der Technik.

Die Erfindung schlägt vor, dem Spreizelement die Form eines breiten und ggf. auch steifen Bandes zu geben, das sich durch die Schraube nicht verdrehen, sondern nur verbiegen lässt.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Figur 1: eine perspektivische Ansicht einer Hohlwanddose nach der Herstellung durch Kunststoffspritzen;
- Figur 2: eine Stirnansicht der Hohlwanddose der Figur 1;
- Figur 3: eine Ansicht der Hohlwanddose von oben in Figur 1 und 2;
- Figur 4: in vergrößertem Maßstab einen Teilschnitt durch die Hohlwanddose etwa längs Linie IV-IV in Figur 2;
- Figur 5: eine Ansicht des Spreizelements etwa in Richtung des Pfeils V in Figur 4;
- Figur 6: eine der Figur 4 entsprechende Darstellung, bei der das Spreizelement in seiner Sperrposition angeordnet ist;
- Figur 7: schematisch die Darstellung einer befestigten Dose;
- Figur 8: eine der Figur 4 entsprechende Darstellung einer zweite Ausführungsform;
- Figur 9: eine der Figur 6 entsprechende Darstellung der zweiten Ausführungsform;
- Figur 10: eine Stirnansicht der zweiten Ausführungsform.

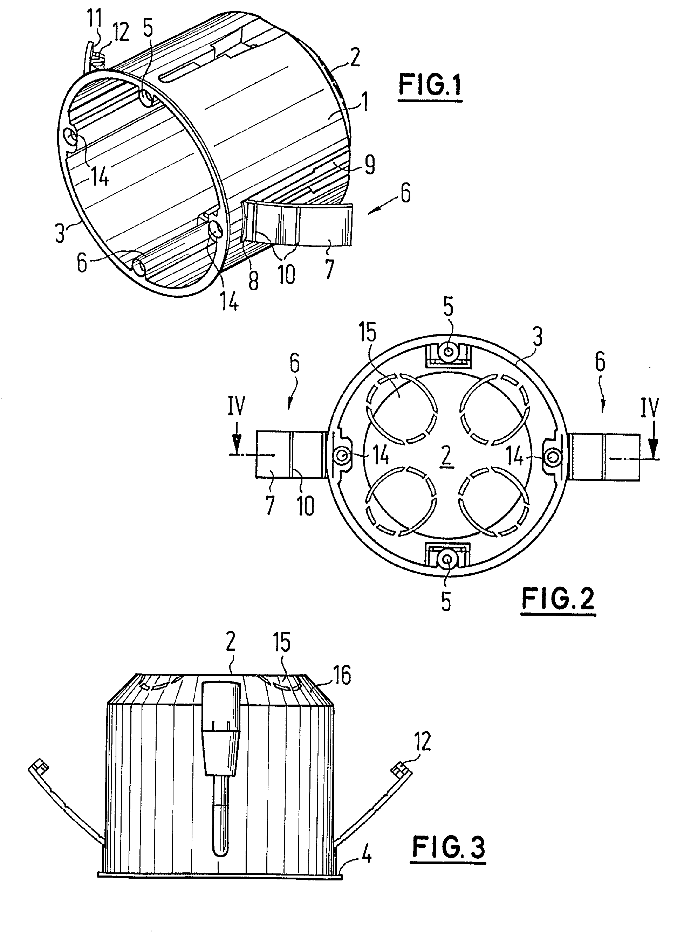

Die Figur 1 zeigt perspektivisch eine Hohlwanddose, wie sie nach dem Herstellen durch Kunststoffspritzen aussieht. Die Hohlwanddose enthält ein Gehäuse 1, das die Form eines geraden Kreiszylinders mit einem geschlossenen Boden 2 aufweist. Im Bereich der vorderen Stirnseite enthält das Gehäuse einen Flansch 3, der umläuft und in einer Ebene liegt. Die Rückseite 4 des Flansches ist dazu bestimmt, an der Vorderseite eines Plattenelements anzuliegen, das ein Loch aufweist, durch die die Hohlwanddose eingesteckt wird. Die Hohlwanddose ist dazu bestimmt, elektrische Installationsteile aufzunehmen, beispielsweise Schalter oder Steckdosen. Zur Befestigung dieser Teile enthält die Hohlwanddose zwei axiale Gewindebohrungen 5, die in angespritzten Rippen 6 ausgebildet sind. In diese Bohrungen 5 werden Schrauben eingeschraubt. Diese können auch so ausgebildet sein, dass sie sich ihr Gewinde selbst formen.

Die beiden Rippen 6, die zur Befestigung der Installationsteile dienen, sind diametral angeordnet.

Mittig zwischen den Rippen 6 sind die Elemente angeordnet, mit denen die Hohlwanddose in der Öffnung des Plattenelements angebracht werden soll, nämlich im dargestellten Beispiel zwei Spreizelemente 6, die in der Figur 1 in dem Zustand dargestellt sind, den sie nach Herstellung der Hohlwanddose einnehmen. Die Spreizelemente weisen die Form eines breiten flachen Bandes 7 auf, das im Bereich seines einen Endes mit Hilfe eines Filmscharniers 8 an einer Stufe des Gehäuses 1 angeformt ist. Diese Stufe wird durch das vordere Ende einer Führungsnut 9 gebildet, die später noch genauer beschrieben wird. Das Spreizelement 6 weist zwei Kerben 10 auf, die als Knickstellen dienen und sich quer zur Längsrichtung des Bandes 7 erstrecken.

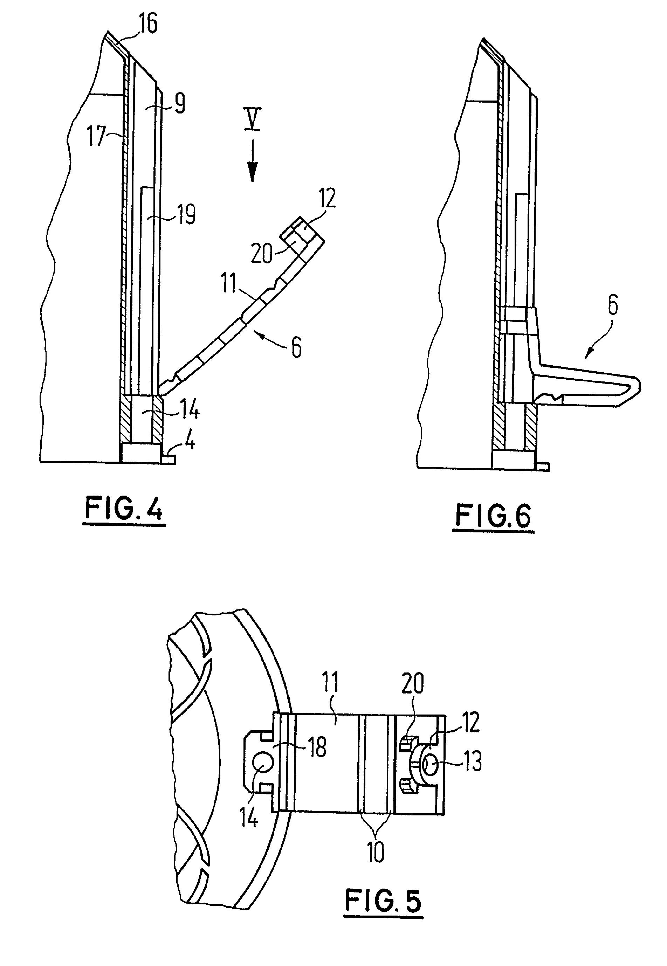

Im Bereich der freien Enden enthalten die Spreizelemente 6 an ihrer dem Gehäuse 1 zugewandten Innenseite 11 einen Vorsprung 12, in dem eine Öffnung mit einem geschlossenen Rand ausgebildet ist. Die Öffnung 13 ist in Figur 5 zu sehen.

In axialer Verlängerung vor den bereits erwähnten Nuten 9 weist die vordere Stirnseite 3 des Gehäuses 1 je eine Öffnung 14 zum Einstecken einer Schraube auf, die in den Figuren nicht dargestellt ist. Hier wird eine übliche Spanplattenschraube verwendet. Diese wird durch die Öffnungen 14 eingesteckt und gelangt dann in die Nuten 9, so dass die Schraube nicht über den Umfang des Gehäuseteils vorspringt.

Die Figur 2 zeigt eine Stirnansicht der Hohlwanddose der Figur 1. Hier ist auch die Zuordnung zwischen den Öffnungen 14 für die Schraube und den Spreizelementen 6 zu sehen.

Der Boden 2 der Hohlwanddose enthält vier durch Sollbruchstellen mit dem Boden 2 verbundene Deckel 15, die aus dem Boden herausgebrochen werden können. Sie bilden also Deckel für Öffnungen, die durch Herausbrechen geöffnet werden können. Hier können elektrische Leitungen in die Dose eingeführt werden.

Die Figur 3 zeigt eine Ansicht der Dose von oben in Figur 2. Der Boden 2 weist einen mittleren ebenen Teil und eine kegelstumpfförmige Übergangsfläche 16 auf. Die Deckel 15 sind zum Teil in der Übergangsfläche 16 vorhanden.

Die Figur 4 zeigt in einem vergrößerten Maßstab einen Axialschnitt durch einen Teil des Gehäuses der Hohlwanddose. Die Nut 9 liegt in der Schnittebene. Sie wird nach innen, d. h. in das Innere des Gehäuses 1 hinein, durch eine Wand 17 geschlossen. Die Nut 9 ist so geformt, dass der Schlitz, der in Längsrichtung der Nut 9 verläuft und den Zugang zu der Nut ermöglicht, schmaler ist als die Nut 9 in ihrem übrigen Bereich. Der Schlitz 18, siehe Figur 5, wird von zwei Rippen 19 begrenzt, die von der vorderen Stufe der Nut 9, an der das Spreizelement 6 angelenkt ist, ausgehen, aber nicht über die gesamte Länge der Nut 9 reichen.

Unmittelbar benachbart zu dem die Öffnung 13 aufweisenden Vorsprung enthalten die Spreizelemente 6 an ihren Innenseiten zwei federnde Haken 20, siehe insbesondere die Figur 5. Klappt man das Spreizelement 6 aus der Position der Figur 4 nach innen, d. h. in Richtung auf die Nut 9, so federn die Haken 20 zurück, und der Führungsabschnitt, der durch die Haken 20 und den Vorsprung 12 gebildet wird, schnappen in die Nut 9 ein. Dadurch wird der Führungsabschnitt in der Nut 9 in Längsrichtung der Nut verschiebbar geführt, während ein Heraustreten nicht mehr möglich ist. Die Längsrichtung der Nut 9 steht senkrecht auf der ebenen vorderen Stirnfläche 3 des Gehäuses 1.

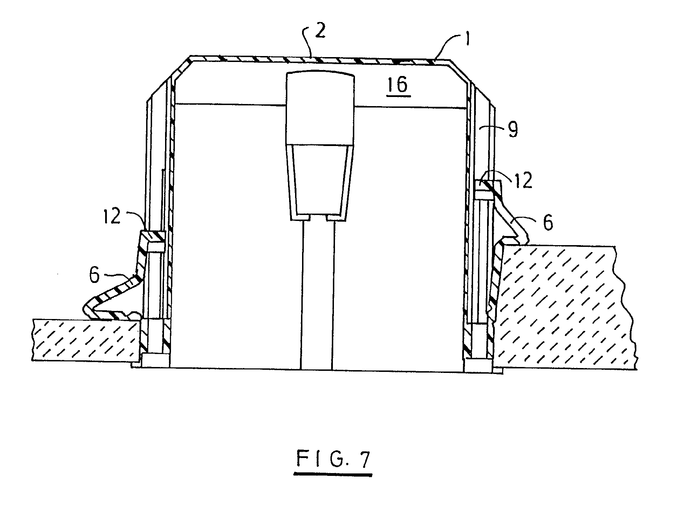

Wird bei dem in der Nut 9 angeordnetem Führungsabschnitt der Spreizelemente 6 nun die Schraube durch die Öffnungen 14 eingesteckt, so gelangt ihre Spitze bei weiterem Durchstecken in die Öffnung 13, wo sie sich ein Gewinde formen kann. Wird die Hohlwanddose jetzt durch eine Öffnung eines Plattenelements eingeschoben, bis sie an der Rückseite 4 des Flansches anliegt, so kann durch Verdrehen der Klemmschraube das Spreizelement 6 ausgeknickt werden. Der Führungsabschnitt wird in der Nut 9 in Richtung auf die Vorderseite geschoben, das Spreizelement knickt wegen der vorhandenen Knickstellen 10 dann aus. Es würde auch ohne Knickstellen nach außen ausknicken, jedoch erleichtern die Knickstellen diesen Vorgang. Im Endzustand nimmt das Spreizelement 6 die in Figur 6 dargestellte Position ein. Je nach Dicke des Plattenelements, in dem die Hohlwanddose festgelegt werden soll, kann der ausgeknickte Teil des Spreizelements 6 auch eine andere Form aufweisen. Dies ist schematisch in Figur 7 dargestellt. Hier ist die Hohlwanddose so eingesetzt, dass links in der Figur 7 eine dünne Platte vorhanden ist, während rechts eine dicke Platte vorhanden ist. Die Spreizelemente nehmen dementsprechend unterschiedliche Gestalt an. Durch die mehreren vorhandenen Knickstellen wird das Ausknicken bei bestimmten Plattendicken erleichtert.

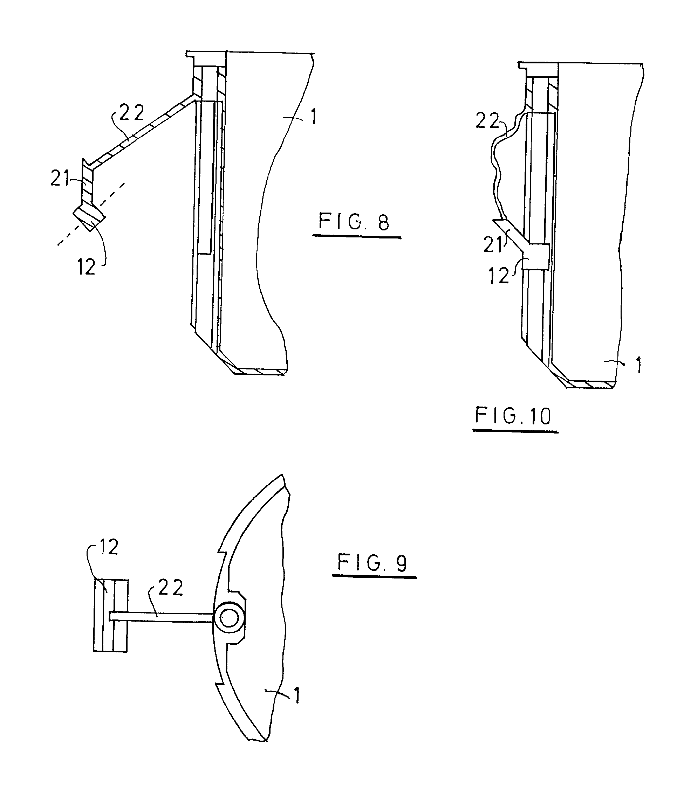

Die in den Figuren 8 bis 10 dargestellte Ausführungsform unterscheidet sich von der vorhergehenden Ausführungsform darin, dass an Stelle des in die Sperrstellung verformbaren Spreizelementes 6 jetzt einen Sperrelement verwendet wird, das einen Führungsabschnitt 12 und einen davon abstehenden Sperrflügel 21 aufweist. Der Sperrflügel ist über ein sehr schmales Band 22 mit der Hohlwanddose, und zwar deren Gehäuse 1, verbunden. Wie man insbesondere der Figur 9 entnehmen kann, ist das Band 22 praktisch nur ein Faden, dessen Funktion nur darin besteht, das Sperrelement an der Dose zu haltern, bis diese montiert wird. Das Sperrelement weist einen Führungsabschnitt 12 auf, der in genau der gleichen Weise aufgebaut ist wie der Führungsabschnitt 12 der Ausführungsform nach den Figuren 1 bis 7. Er wird daher nicht nochmals beschrieben.

Der Führungsabschnitt 12 wird nach Herstellung der Hohlwanddose in die Nut eingeschnappt und eine Schraube durch die entsprechende Öffnung des Führungsabschnitts hindurchgesteckt. Der Faden 22 kann bei Festziehen der Schraube abreißen oder auch bleiben. Die Verklemmung geschieht mit Hilfe des verformbaren Sperrflügels 21.

## Patentansprüche

1. Hohlwanddose, mit
1.1 einem Gehäuse (1), das
1.1.1 an seiner Außenseite einen umlaufenden mindestens teilweise ausgebildeten Flansch (3) aufweist,
1.2 mindestens einem Sperrelement (6), das
1.2.1 an dem Gehäuse (1) vorzugsweise angebracht oder separates Teil zum Anfügen ist und
1.2.2 aus einer Position innerhalb des Umfangs des Gehäuses in eine Sperrposition bringbar ist, sowie mit
1.3 einem Betätigungselement zum Überführen des Sperrelements (6) in die Sperrposition.

2. Hohlwanddose nach Anspruch 1, bei der das Sperrelement als Spreizelement ausgebildet ist, das in die Sperrstellung verformbar ist.

3. Hohlwanddose nach Anspruch 2, bei der das Spreizelement (6) langgestreckt ausgebildet und mit seinem einen Ende an dem Gehäuse (1) angebracht ist.

4. Hohlwanddose nach einem der vorhergehenden Ansprüche, bei der das Betätigungselement an dem freien Ende des Spreizelements (6) bzw. an dem Sperrelement angreift.

5. Hohlwanddose nach einem der vorhergehenden Ansprüche, bei der das Spreizelement (6) im Bereich seines freien Endes bzw. das Sperrelement eine Öffnung (13) mit geschlossenem Rand aufweist, die als Mutter für das als Schraube ausgebildete Betätigungselement ausgebildet ist.

6. Hohlwanddose nach einem der vorhergehenden Ansprüche, bei der die Schraube durch ein Loch (14) in dem Gehäuse (1) hindurch greift.

7. Hohlwanddose nach Anspruch 5 oder 6, bei der die Schraube innerhalb des Umfangs des Gehäuses (1) angeordnet ist.

8. Hohlwanddose nach einem der vorhergehenden Ansprüche, bei der das freie Ende des Spreizelements (6) bzw. das Sperrelelement an dem Gehäuse (1) verschiebbar geführt ist.

9. Hohlwanddose nach einem der vorhergehenden Ansprüche, bei der das freie Ende des Spreizelements (6) bzw. das Sperrelement ein Führungselement aufweist, das in eine Führung des Gehäuses (1) eingreift.

10. Hohlwanddose nach Anspruch 9, bei der die Führung des Gehäuses (1) als Nut (9) ausgebildet ist.

11. Hohlwanddose nach Anspruch 10, bei der das Führungselement von der Seite her in die Führungsnut (9) einschnappbar ist.

12. Hohlwanddose nach einem der vorhergehenden Ansprüche, bei der das Spreizelement (6) über ein Filmscharnier mit dem Gehäuse (1) verbunden ist.

13. Hohlwanddose nach einem der vorhergehenden Ansprüche, bei der das Spreizelement (6) mindestens eine Knickstelle (10), vorzugsweise mehrere Knickstellen (10) aufweist.

14. Hohlwanddose nach einem der Ansprüche 4 bis 12, bei der die Schraube eine Spanplattenschraube ist.

15. Hohlwanddose nach einem der vorhergehenden Ansprüche, bei der das Spreizelement (6) die Form eines breiten Bandes aufweist, das sich bei der Spreizung um seine Anlenkstelle oder eine hierzu parallele Achse verformt.

16. Hohlwanddose nach einem der vorhergehenden Ansprüche, bei der das Spreizelement (6) bzw. das Sperrelement an dem Gehäuse (1) einstückig angeformt ist.

17. Hohlwanddose nach einem der Ansprüche 1 bis 15, bei der das Sperrelement (6) als separates Teil ausgebildet und mit dem Gehäuse (1) verbindbar ist, insbesondere durch Einschnappen.
